# EUROPÄISCHE PATENTSCHRIFT

(11) **EP 0 719 395 B1**
(45) Veröffentlichungstag und Bekanntmachung des Hinweises auf die Patenterteilung: **13.01.1999**
(21) Anmeldenummer: 95926889.7
(22) Anmeldetag: 14.07.1995
(51) Int. Cl.: F16K 31/06

(54) **MODULARES VENTIL FÜR STRÖMENDE MEDIEN**
MODULAR VALVE FOR FLOWING MEDIA
SOUPAPE MODULAIRE POUR MILIEUX EN ECOULEMENT

(30) Priorität: 19.07.1994 DE 4425540
(43) Veröffentlichungstag der Anmeldung: 03.07.1996
(73) Patentinhaber: Bürkert Werke GmbH & Co., D-74653 Ingelfingen (DE)
(72) Erfinder: HETTINGER, Christoph, D-74653 Ingelfingen (DE); ROHRBECK, Heribert, D-74523 Schwäbisch Hall (DE); KALB, Helmut, D-74632 Neuenstein (DE); RENNINGER, Jürgen, D-74626 Bretzfeld (DE)
(74) Vertreter: Degwert, Hartmut, Dipl.-Phys.
(86) Internationale Anmeldenummer: EP9502774
(87) Internationale Veröffentlichungsnummer: WO9602782

(56) Entgegenhaltungen:
- DE-A- 3 346 290
- DE-A- 4 405 657
- FR-A- 2 103 773
- US-A- 5 139 226
- PATENT ABSTRACTS OF JAPAN vol. 010 no. 146 (M-482) ,28.Mai 1986 & JP,A,61 002982 (TAKASHI HOSOKAWA) 8.Januar 1986,

## Beschreibung

Die Erfindung betrifft ein modulares Ventil für strömende Medien, mit einem mehrere Medienanschlüsse aufweisenden Ventilgehäuse, einer in das Ventilgehäuse eingesetzten, federnd in eine Ausgangsstellung belasteten Schaltwippe und einem gegenüber der Schaltwippe an das Ventilgehäuse angefügten elektromagnetischen Ventilantrieb, durch den die Schaltwippe entgegen der Federbelastung in eine Arbeitsstellung bewegbar ist, wobei wenigstens ein Medienanschluß an einem Ventilsitz mündet, an den einer der an der Schaltwippe vorgesehenen Schließkörper anlegbar ist.

Derartige Ventile sind im Stand der Technik allgemein bekannt (vgl. z.B. FR-A-2 103 773.)

In der Praxis können sich je nach Anwendungsfall Änderungen insbesondere bei den medienseitigen und elektrischen Schnittstellen des Ventils ergeben. Bei den bisher üblichen Ausführungen führt dies in der Regel dazu, daß mehr oder weniger das gesamte Ventil entsprechend geändert werden muß. Demnach werden für unterschiedliche Anwendungsfälle im Gesamtaufbau unterschiedliche Ventile verwendet.

Zur Erzielung unterschiedlicher Wirkungsweisen von Magnetventilen ist es bekannt, den Volumenstrom durch sogenannte Rangierplatten in entsprechende Kanäle umzulenken. Hierbei wird die eigentliche Anschlußart am Ventil beibehalten. In den den umgelenkten Volumenstrom führenden Kanälen ergibt sich jedoch ein erheblicher Strömungsverlust. Von Nachteil ist auch, daß sich durch die Rangierplatte größere Einbaumaße für das Ventil ergeben. Zudem ist bei den herkömmlichen Magnetventilen eine Änderung des medienseitigen Teils nur durch ein Auswechseln von Teilen möglich, indem z.B. unterschiedliche Federelemente eingebracht werden. Auch dies macht es wiederum erforderlich, eine Vielzahl unterschiedlicher Teile auf Lager zu halten. Abgesehen davon, daß eine solche Lagerhaltung kostenintensiv ist, ist mit der hohen Anzahl unterschiedlicher Teile stets auch die Gefahr eines Vertauschens verbunden, wodurch ein jeweiliger Produktionsprozeß beeinträchtigt wird.

Ziel der Erfindung ist es, ein modulares Ventil der eingangs genannten Art zu schaffen, das unter Beibehaltung eines im wesentlichen einheitlichen Grundaufbaus problemlos insbesondere auch an unterschiedliche elektrische und medienseitige Anschlußerfordernisse angepaßt werden kann.

Zur Lösung dieser Aufgabe ist nach der Erfindung vorgesehen, daß zwischen dem Ventilgehäuse und dem elektromagnetischen Ventilantrieb eine allgemein magnetisch nichtleitende Platte eingesetzt ist, die lokal begrenzte magnetisch leitende Bereiche aufweist, über die der elektromagnetische Ventilantrieb auf einen der beiden Schenkel der Schaltwippe wirkt, während der andere Schenkel magnetisch nicht beaufschlagbar ist, daß die an den entgegengesetzten Enden der Schaltwippe vorgesehenen Schließkörper und die Pole des elektromagnetischen Ventilantriebs jeweils bezüglich einer bei zusammengebautem Ventil die Wippenachse enthaltenden, zur Zwischenplatte senkrechten Ebene symmetrisch angeordnet sind und daß das Ventilgehäuse, die Schaltwippe mit zugeordneter Federbelastung, die Zwischenplatte und/oder der mit einem elektrischen Anschlußteil koppelbare elektromagnetische Ventilantrieb alternativ jeweils in zwei unterschiedlichen, bezüglich einer gedachten, zur Wippenachse senkrechten und in der Symmetrieebene liegenden Achse um 180° gedrehten Stellungen montierbar sind.

Aufgrund dieser Ausbildung kann für unterschiedliche Ventilausführungen insbesondere ein einheitlicher Ventilantrieb verwendet werden. Durch Anbringen unterschiedlicher elektrischer Anschlußteile sowie unterschiedlicher medienseitiger Ventilgehäuse, die jeweils in modularer Bauweise ausgeführt sind, kann das Ventil problemlos an die jeweiligen Erfordernisse angepaßt werden. Unterschiedlichen Anforderungen hinsichtlich der elektrischen und medienseitigen Anschlußart kann insbesondere dadurch Rechnung getragen werden, daß die Schaltwippe mit zugeordneter Federbelastung, die Zwischenplatte und/oder der mit einem elektrischen Anschlußteil koppelbare elektromagnetische Ventilantrieb alternativ jeweils in zwei unterschiedlichen, um 180° gedrehten Stellungen montierbar sind.

Infolge der symmetrischen Anordnung der Magnetpole bzw. einer entsprechend symmetrischen Ausbildung des Elektromagneten kann dieser um 180° gedreht montiert werden, ohne daß sich dadurch die Wirkungsweise des Ventils ändert. Die elektrische Anschlußseite kann somit geändert werden, ohne den medienseitigen Teil, d.h. das Ventilgehäuse zu verändern. Die Wirkungsweise des Ventils kann beispielsweise dadurch verändert werden, daß die Zwischenplatte und die Schaltwippe mit zugeordneter Federbelastung jeweils in einer um 180° gedrehten Stellung eingebaut werden.

Der gewünschte symmetrische Aufbau des Elektromagneten wird vorteilhafterweise dadurch erreicht, daß dieser ein dreischenkliges Joch sowie eine auf dessen mittlerem Schenkel angeordnete Spule enthält. Bei zusammengebautem Ventil liegt nur dem mittleren Jochschenkel und einem der beiden äußeren Jochschenkel jeweils ein lokal begrenzter magnetisch leitender Bereich der Zwischenplatte gegenüber. Der andere äußere Jochschenkel bleibt unwirksam.

Bei einer bevorzugten Ausführungsform ist die Schaltwippe über sich entlang ihrer Drehachse verlaufende elastische Stege an einem aus dichtendem Material bestehenden Rahmenteil gelagert, der als Gehäusedichtung zwischen das Ventilgehäuse und die dieses abschließende Zwischenplatte einsetzbar ist, wobei auch die an der Schaltwippe vorgesehenen Schließkörper aus dichtendem Matrial bestehen und die Gehäusedichtung integral mit den Stegen und den Schließkörpern ausgebildet ist. Aufgrund dieser Integration der Gehäusedichtung in die Sitzdichtung wird nicht nur die Anzahl der einzelnen Teile reduziert, es wird auch die Montage der Schaltwippe erleichtert, wodurch die Herstellungskosten weiter verringert werden. Ferner wird eine zusätzliche Dämpfung der Schaltmechanik erreicht.

Der Schaltwippe ist vorzugsweise auch eine manuelle Betätigungseinrichtung zugeordnet. Diese weist vorteilhafterweise ein an einer Außenseite des Ventilgehäuses angeordnetes Betätigungselement auf, das über eine sich ins Innere des Ventilgehäuses erstreckende, zur Drehachse der Schaltwippe senkrechte Antriebswelle mit einer Nockenwelle verbunden ist, die mit zwei sich radial in entgegengesetzte Richtungen erstreckenden, jeweils einem der beiden Wippenschenkel zugeordneten Nocken versehen ist. Über diese manuelle Betätigungseinrichtung kann somit je nach Drehrichtung sowohl der eine als auch der andere Wippenschenkel beaufschlagt werden. Dies ist insbesondere für ein Rücksetzen im Falle eines Impulsbetriebs des Ventils von Vorteil. In dieser Betriebsart kann beispielsweise ein Permanentmagnet die Schaltmechanik nach dem manuellen Setzen festhalten. Diese Haltekraft wird beim Rücksetzen durch die Wirkung des betreffenden Nockens auf der gegenüberliegenden Seite der Schaltmechanik überwunden. Von Vorteil ist auch, daß insbesondere durch einen um 180 ° gedrehten Einbau der Schaltwippe und der Zwischenplatte die Wirkungsweise des Ventils verändert werden kann, ohne daß hierbei gleichzeitig auch die manuelle Betätigungseinrichtung auf die gegenüberliegende Seite des Ventils verlagert werden muß. Um die Funktion der manuellen Betätigungseinrichtung beizubehalten genügt es, die Nockenwelle um 180° gedreht auf die Antriebswelle aufzustecken. Dies ist insbesondere dann von Vorteil, wenn die Wirkungsweise des Ventils erst nachträglich beim Anwender vorgenommen werden muß.

Gemäß einer bevorzugten Ausführungsvariante kann in dem Ventilgehäuse wenigstens eine druckanschlußseitige und wenigstens eine rücklaufanschlußseitige Federaufnahme vorgesehen und der Schaltwippe wenigstens eine alternativ auf den beiden Anschlußseiten einsetzbare Rückstellfeder zugeordnet sein, die sich für eine jeweilige Beaufschlagung der Schaltwippe an einer betreffenden Federaufnahme abstützt, wobei die auf unterschiedlichen Anschlußseiten vorgesehenen Federaufnahmen vom der Schaltwippe benachbarten Gehäuserand aus betrachtet unterschiedlich tief in dem Ventilgehäuse liegen. Hierbei liegt die druckanschlußseitige Federaufnahme zweckmäßigerweise tiefer in dem Ventilgehäuse als die rücklaufseitige Federaufnahme. Damit können bei entsprechend gewählten unterschiedlichen Tiefen der Federaufnahmen für die unterschiedlichen Wirkungsweisen des Ventils auch identische Rückstellfedern verwendet werden. Es kann insbesondere erreicht werden, daß der Federweg für ein stromlos offenes Ventil länger ausfällt als der Federweg für ein stromlos geschlossenes Ventil. In diesem Fall erhält man bei der Verwendung identischer Federn für die beiden Betriebsarten entsprechend unterschiedliche Federkräfte.

Das erfindungsgemäße Ventil gestattet somit problemlos eine Vielzahl unterschiedlicher, vom Anwender gewünschter Einbauvariationen. Durch den erfindungsgemäßen modularen Aufbau und die Standardisierung der Teile ergeben sich eine einfache und kostengünstige Montage und Wartung. Durch die modulare Bauweise ist auch gewährleistet, daß die Lagerhaltung auf wenige Bauteile für eine Ventilgröße beschränkt werden kann. Kostenintensive Sonderlösungen entfallen.

In den Unteransprüchen sind weitere vorteilhafte Ausführungsvarianten der Erfindung angegeben.

Weitere Mermale und Vorteile der Erfindung ergeben sich aus der folgenden Beschreibung und aus der Zeichnung, auf die Bezug genommen wird. In der Zeichnung zeigen:
Fig. 1 eine vereinfachte schematische Darstellung des modularen Aufbaus eines Ventils, wobei der Übersichtlichkeit halber Teile des Ventilantriebs weggelassen sind,
Fig. 2 eine Fig. 1 vergleichbare schematische, auseinandergezogene Darstellung, wobei zusätzlich auch der Elektromagnet des Ventilantriebs gezeigt ist,
Fig. 3 eine schematische perspektivische Schnittansicht des Ventilgehäuses mit Schaltwippe und eingebauter manueller Betätigungseinrichtung,
Fig. 4 Einzelteile der manuellen Betätigungseinrichtung in einer auseinandergezogenen, perspektivischen Darstellung,
Fig. 5 eine schematische Ansicht der Unterseite der Schaltwippe,
Fig. 6a) bis 6d) vier verschiedene Kombinationsmöglichkeiten des Zusammenbaus eines Ventils in perspektivischer, auseinandergezogener Darstellung, und
Fig. 7 eine Fig. 3 vergleichbare vereinfachte schematische Schnittansicht des Ventilgehäuses mit versetztem Schnitt zur Darstellung unterschiedlich tiefer Federaufnahmen.

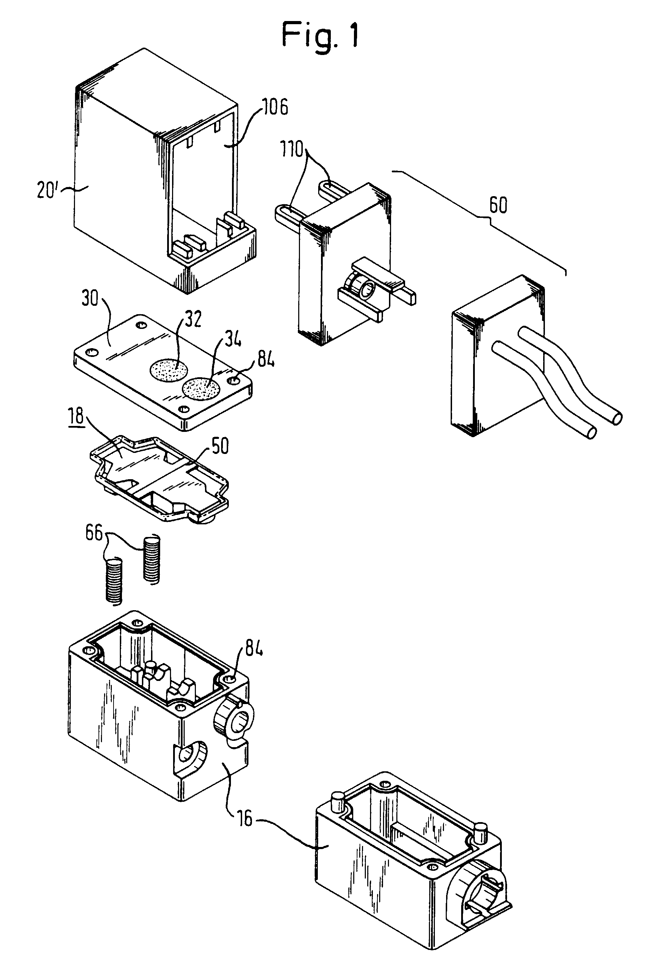

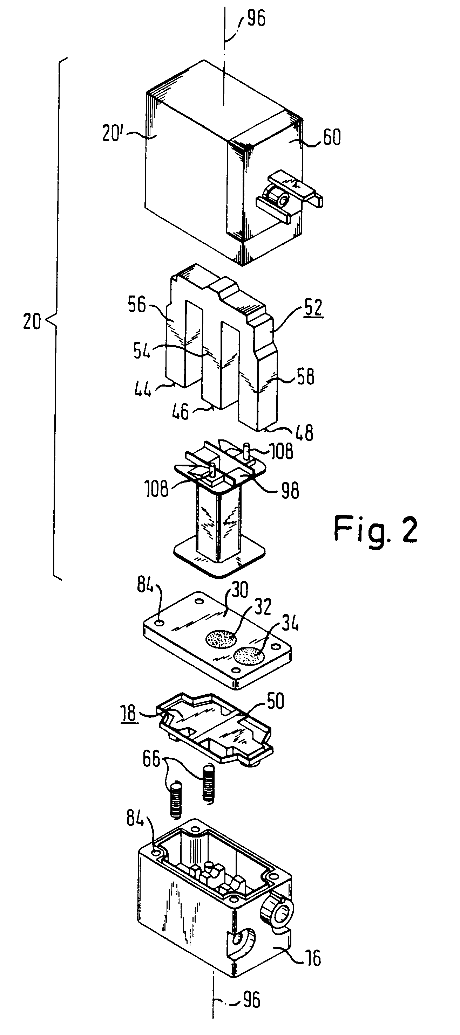

In den Figuren 1 und 2 sind in rein schematischer, auseinandergezogener Darstellung jeweils verschiedene Komponenten eines modularen Ventils für strömende Medien gezeigt. Danach enthält das modulare Ventil ein mehrere Medienanschlüsse aufweisendes Ventilgehäuse 16, eine in das Ventilgehäuse 16 einsetzbare Schaltwippe 18, einen gegenüber der Schaltwippe 18 an das Ventilgehäuse 16 anfügbaren elektromagnetischen Ventilantrieb 20 mit zugeordnetem Gehäuse 20' sowie einen mit dem elektromagnetischen Ventilantrieb 20 bzw. dessen Gehäuse 20' koppelbaren elektrischen Anschlußteil 60 zur Versorgung des Elektromagneten.

In Fig. 1 sind zwei alternativ verwendbare Ventilgehäuse 16 dargestellt. Der mit dem elektromagnetischen Ventilantrieb 20 koppelbare elektrische Anschlußteil 60 ist beim vorliegenden Ausführungsbeispiel mehrteilig. Aufgrund des modularen Aufbaus können je nach Anwendungsfall auch andere Ventilgehäuse 16 und andere elektrische Anschlußteile 60 verwendet werden, während der elektromagnetische Ventilantrieb 20 zweckmäßigerweise als einheitliche Komponente vorgesehen ist.

Der Schaltwippe 18 sind zwei Rückstellfedern 66 zugeordnet, durch die im eingebauten Zustand einer der beiden Wippenschenkel derart beaufschlagt wird, daß die Schaltwippe 18 in eine Ausgangsstellung belastet ist. Durch den elektromagnetischen Ventilantrieb 20 kann die Schaltwippe 18 dann aus dieser Ausgangsstellung heraus in eine Arbeitsstellung bewegt werden.

Zwischen der das betreffende Medium führenden Ventilkammer 16 und dem elektromagnetischen Ventilantrieb 20 ist eine Zwischenplatte 30 vorgesehen, durch die das Ventilgehäuse 16 auf der dem elektromagnetischen Ventilantrieb 20 zugewandten Seite dicht verschlossen wird.

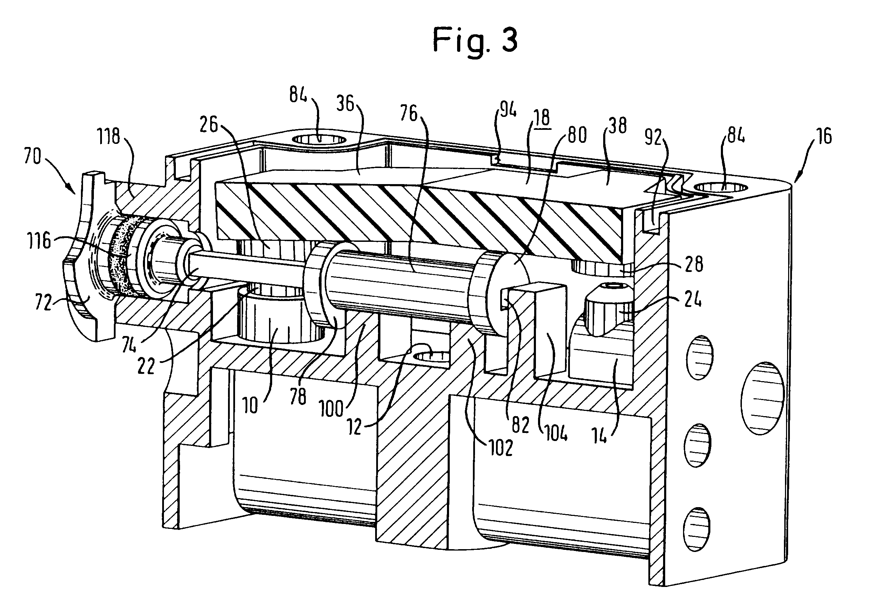

Diese Zwischenplatte 30 besteht allgemein aus einem magnetisch nichtleitenden Material. Sie weist lediglich zwei lokal begrenzte magnetisch leitende Bereiche 32, 34 auf, über die der elektromagnetische Ventilantrieb 20 auf einen der beiden Schenkel 36, 38 (vgl. Fig. 3) der Schaltwippe 18 wirken kann, während der andere Schenkel aufgrund der Abschirmung durch das magnetisch nichtleitende Material magnetisch nicht beaufschlagbar ist.

Das Ventilgehäuse 16 sowie die Zwischenplatte 30 besitzen jeweils vier Befestigungsbohrungen 84, über die die Zwischenplatte 30 an dem Ventilgehäuse 16 beispielsweise festschraubbar ist. Die innerhalb des geschlossenen Ventilgehäuses 16 angeordnete Schaltwippe 18 ist durch den außen angeordneten elektromagnetischen Ventilantrieb 20 um die Achse 50 schwenkbar.

Der elektrische Anschlußteil 60 wird seitlich auf den elektromagnetischen Ventilantrieb 20 bzw. dessen Gehäuse 20' aufgesteckt. Hierzu besitzt das Gehäuse 20' eine entsprechende Aussparung 106.

Nach Fig. 2 enthält der elektromagnetische Ventilantrieb 20 ein dreischenkliges Joch 52 sowie eine auf dessen mittlerem Schenkel 54 angeordnete Spule 98, die im zusammengebauten Zustand in dem Gehäuse 20' aufgenommen sind. Die drei Schenkel 54, 56, 58 des Jochs 52 liegen in einer Ebene, wobei das Joch 52 bezüglich einer dazu senkrechten, durch den mittleren Schenkel 54 verlaufenden Ebene symmetrisch aufgebaut ist. Die an den freien Enden der äußeren Schenkel 56, 58 vorgesehenen Pole 44, 48 weisen somit den gleichen Abstand zu dem mittleren Pol 46 auf, der am freien Ende des mittleren Schenkels 54 vorgesehen ist.

Die Spule 98 ist am oberen Ende mit zwei Anschlußstiften 108 versehen, die mit am elektrischen Anschlußteil 60 angeordneten Kontakten 110 in Eingriff treten, die sich bei aufgesetztem elektrischem Anschlußteil 60 in das Gehäuse 20 hineinerstrecken.

Bei zusammengebautem Ventil liegt der mittlere Schenkel 54 des Jochs 52 zumindest im wesentlichen in der die Wippenachse 50 enthaltenden, zur Zwischenplatte 30 senkrechten Symmetrieebene.

Nach Fig. 3 enthält das Ventilgehäuse 16 einen Druckanschluß 10 und einen Rücklaufanschluß 14. Beide Anschlüsse 10, 14 münden jeweils an einem Ventilsitz 22 bzw. 24 in die innerhalb des Ventilgehäuses 16 definierte Ventilkammer.

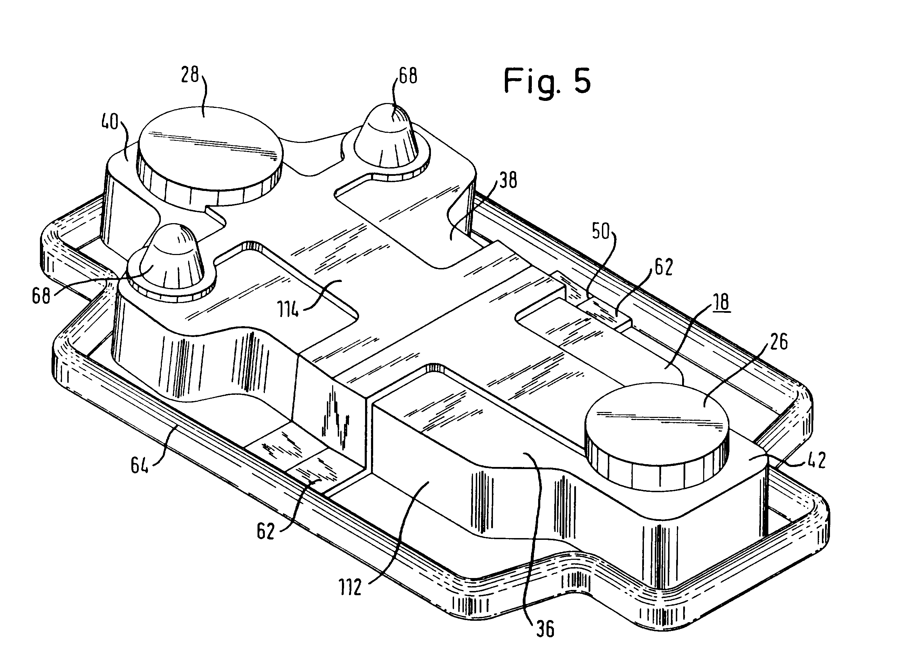

An den entgegengesetzten Enden 40, 42 der Schaltwippe 18 ist jeweils ein Schließkörper 26, 28 angeordnet, der mit einem betreffenden Ventilsitz 22, 24 zusammenwirkt (vgl. auch Fig. 5). Die dem Druckanschluß 10 und dem Rücklaufanschluß 14 zugeordneten Ventilsitze 22, 24 sind ebenso wie die beiden Schließkörper 26, 28 der eingesetzten Schaltwippe 18 bezüglich der die Wippenachse 50 enthaltenden, zur Zwischenplatte 30 senkrechten Ebene symmetrisch im Ventilgehäuse 16 angeordnet.

Bei zusammengebautem Ventil liegt der in der Plattenmitte angeordnete lokal begrenzte magnetisch leitende Bereich 32 der Zwischenplatte 30 zumindest im wesentlichen über der Wippenachse 50. Ferner liegt dieser mittlere magnetisch leitende Bereich 32 dem am freien Ende des mittleren Jochschenkels 54 gebildeten mittleren Pol 46 gegenüber, wobei er lokal auf diesen Pol 46 begrenzt ist. Demgegenüber ist der andere magnetisch leitende Bereich 34 je nach relativer Einbaulage der Zwischenscheibe und des Magneten gegenüber dem Pol 44 oder 48 angeordnet, der durch das freie Ende des äußeren Jochschenkels 56 bzw. 58 gebildet wird. Zudem liegt der jeweils mit einem äußeren Pol 44, 48 ausgerichtete magnetisch leitende Bereich stets auch einem betreffenden Ende 40, 42 der Schaltwippe 18 gegenüber.

Außer den beiden jeweils an einem Ventilsitz 22, 24 mündenden Anschlüssen 10, 14 ist das Ventilgehäuse 16 noch mit einem dazwischenliegenden ungesteuerten Arbeitsanschluß 12 versehen, der ebenso wie die beiden anderen Anschlüsse 10, 14 in die durch das Ventilgehäuse 16 definierte Ventilkammer mündet.

In der in Fig. 3 gezeigten Einbaulage liegt der Schließkörper 26 bei durch die Rückstellfedern 66 in die Ausgangsstellung belasteter Schaltwippe 18 dichtend an dem Ventilsitz 22 an, während der am gegenüberliegenden Ende 40 der Schaltwippe 18 vorgesehene Schließkörper 28 von dem zugeordneten Ventilsitz 24 abgehoben ist. Bei entsprechend eingebauter Zwischenplatte 30 kann die Schaltwippe 18 dann durch den elektromagnetischen Ventilantrieb 20 aus dieser Ausgangsstellung heraus in eine Arbeitsstellung bewegt werden, in der der Schließkörper 28 dichtend an den Ventilsitz 24 angelegt wird, während der am gegenüberliegenden Ende 42 (vgl. auch Fig. 5) der Schaltwippe 18 vorgesehene Schließkörper 26 von dem zugeordneten Ventilsitz 22 abgehoben wird.

Beim dargestellten Ventil sind das Ventilgehäuse 16, die Schaltwippe 18 mit den zugeordneten Rückstellfedern 66, die Zwischenplatte 30 und der elektromagnetische Ventilantrieb 20, mit dem ein ebenfalls als Modul ausgebildeter elektrischer Anschlußteil 60 koppelbar ist, alternativ jeweils in zwei unterschiedlichen, bezüglich einer gedachten, zur Wippenachse 50 senkrechten und durch den mittleren Jochschenkel 54 verlaufenden Achse 96 (vgl. Fig. 2) um 180° gedrehten Stellungen montierbar.

Aufgrund des symmetrischen Aufbaus des das Joch 52 sowie die Spule 58 enthaltenden Elektromagneten werden über den gemeinsamen mittleren Jochschenkel 54 und den einen äußeren Jochschenkel 56 bzw. den anderen äußeren Jochschenkel 58 zwei Magnetkreise gebildet, wobei durch die Zwischenplatte 30 sichergestellt ist, daß stets nur einer der beiden Magnetkreise auf einen der Schenkel 36, 38 der Schaltwippe 18 wirkt. Gegenüber dem anderen Wippenschenkel wirkt die Zwischenplatte 30 als magnetische Abschirmung.

Aufgrund seines symmetrischen Aufbaus kann das Joch 52 um die Achse 96 gedreht werden, ohne daß dadurch die Wirkungsweise des Ventils verändert wird. Die Wirkungsweise des Ventils kann verändert werden, indem insbesondere die Zwischenplatte 30 und die Schaltwippe 18 mit zugeordneten Rückstellfedern 66 in einer um 180° gedrehten Stellung eingebaut werden. In jedem Fall stellt die Zwischenplatte 30 auf die weiter unten näher beschriebene Weise eine dichtende Trennung zwischen dem dem Medium ausgesetzten Teil des Ventils und dem elektromagnetischen Ventilantrieb 20 sicher. Diese Trennung ermöglicht einen Austausch des Antriebs ohne Abschaltung des vom Medium beaufschlagten Teils.

Wie insbesondere anhand von Fig. 5 zu erkennen ist, enthält die Schaltwippe 18 einen im wesentlichen kreuzförmigen Wippenkörper 112, der über Stege 62 an einem aus dichtendem Material bestehenden Rahmenteil gelagert ist, der gleichzeitig als Gehäusedichtung 64 dient, die zwischen das Ventilgehäuse 16 und die dieses abschließende Zwischenplatte 30 einsetzbar ist.

Die sich entlang der Wippenachse 50 erstreckenden, diese definierenden Stege 62 sind Teil einer doppelkreuzförmigen Struktur 114, die sowohl die beiden Schließkörper 26, 28 als auch zwei Noppen 68 enthält, durch die die Rückstellfedern 66 geführt werden. Somit bestehen insbesondere auch die beiden Schließkörper 26, 28 jeweils aus dichtendem Material. Diese Schließkörper 26, 28 sind zusammen mit den beiden Noppen 68 und der am Wippenkörper 112 befestigten Struktur 114 einschließlich der Stege 62 integral mit der Gehäusedichtung 64 ausgebildet. Diese ringförmige Gehäusedichtung 64 wird in eine in Fig. 3 dargestellte Nut 92 am oberen Rand des anschließend durch die Zwischenplatte 30 zu verschließenden Ventilgehäuses 16 eingesetzt.

Aufgrund der integralen Ausbildung von Gehäusedichtung und Sitzdichtung kann eine gemeinsame Spritzform verwendet werden, die zusätzlich zur Dichtkontur für das Ventilgehäuse die Sitzdichtkontur einschließlich der am Wippenkörper 112 zu befestigenden Struktur 114 mit einem schmalen Steg 62 als Verbindung enthält. Abgesehen von der einfachen Montage und den geringeren Kosten wird zusätzlich eine optimale Dämpfung der Schaltwippe 18 erreicht.

Wie insbesondere anhand der Figuren 3, 4 und 6 zu erkennen ist, kann der Schaltwippe 18 eine manuelle Betätigungseinrichtung 70 zugeordnet sein.

Bei den dargestellten Ausführungsbeispielen weist diese am Ventilgehäuse 16 gelagerte, unterhalb der Schaltwippe 18 vorgesehene manuelle Betätigungseinrichtung 70 ein an einer Außenseite des Ventilgehäuses 16 angeordnetes Betätigungselement 72 auf, das beispielsweise durch einen Handknebelknauf oder eine Schlitzschraube gebildet sein kann. Dieses Betätigungselement 72 ist über eine sich ins Innere des Ventilgehäuses 16 erstreckende, zur Drehachse 50 der Schaltwippe 18 senkrechte Antriebswelle 74 mit einer Nockenwelle 76 verbunden, die unterhalb der Schaltwippe 18 angeordnet ist. Diese Nockenwelle 76 weist zwei sich radial in entgegengesetzte Richtungen erstreckende, jeweils einem der beiden Wippenschenkel 36, 38 zugeordnete Nocken 78, 80 auf.

Die Nockenwelle 76 ist als Hohlwelle ausgebildet und alternativ in zwei bezüglich einer gedachten, zur Antriebswelle 74 senkrechten Achse um 180° gedrehten Stellungen triebschlüssig axial auf die Antriebswelle 74 aufsteckbar. Hierzu besitzt die Antriebswelle 74 einen viereckigen Querschnitt, während die Nockenwelle 76 mit einer dazu komplementären, durchgehenden Öffnung 82 versehen ist.

Nach Fig. 3 ist der sich zwischen den beiden äußeren Nocken 78, 80 erstreckende Wellenabschnitt der Nockenwelle 76 an zwei auf gegenüberliegenden Seiten des ungesteuerten Arbeitsanschlusses 12 angeordneten Stützen 100, 102 abgestützt. Im Bereich der Stütze 102 ist ferner ein Anschlag 104 vorgesehen, dem das innerhalb des Ventilgehäuses 16 liegende freie Ende der Antriebswelle 74 gegenüberliegt.

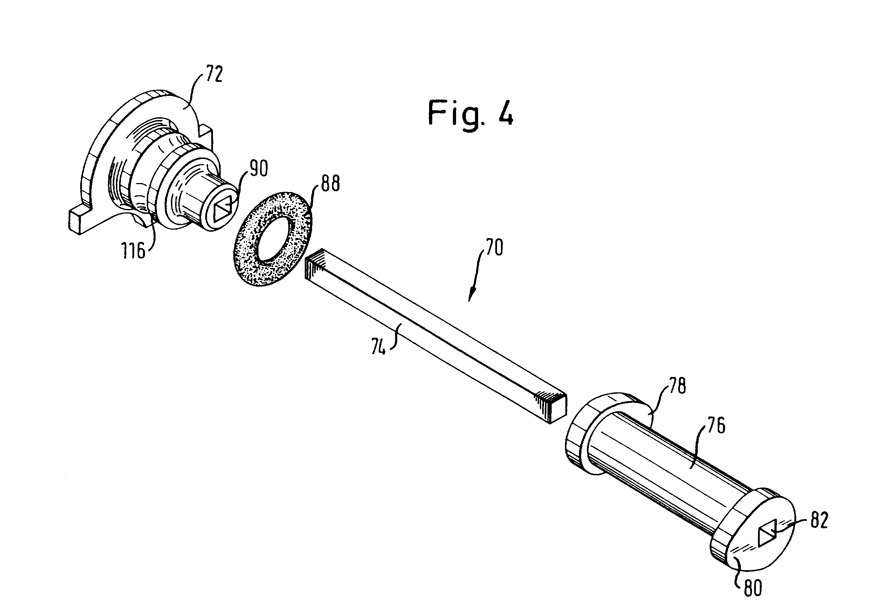

Auf das andere Ende der Antriebswelle 74 ist das Betätigungselement 72 über einen gestuften zylindrischen Ansatz aufgesteckt, der in einem äußeren rohrstutzenartigen Ansatz 118 des Ventilgehäuses 16 gelagert ist. Der dem Betätigungselement 72 zugeordnete zylindrische Ansatz 116 weist am freien Ende eine zur Querschnittsform der Antriebswelle 74 komplementäre Öffnung 90 auf (vgl. Fig. 4). Die Abdichtung des Ventilgehäuses 16 im Bereich des zylindrischen Ansatzes 118 erfolgt über eine Ringdichtung 88, die auf das einen entsprechend kleineren Außendurchmesser aufweisende freie Ende des zylindrischen Ansatzes 116 aufsetzbar ist.

In der in Fig. 4 gezeigten Stellung der manuellen Betätigungseinrichtung 70 erstrecken sich die beiden Nocken 78, 80 der Nockenwelle 76 in einer gemeinsamen horizontalen Ebene. In diesem Fall erfolgt keine Beaufschlagung der Schaltwippe 18 durch die Betätigungseinrichtung 70.

Wird nun ausgehend von der in Fig. 4 gezeigten Stellung das Betätigungselement 72 im Uhrzeigersinn gedreht, so wird der linke Nocken 78 nach oben gerichtet, wodurch der betreffende Schenkel 36 der Schaltwippe 18 beaufschlagt wird, sofern dieser mit seinem zugeordneten Schließkörper zuvor gegen den betreffenden Ventilsitz 22 gehalten wurde. Wird das Betätigungselement 72 gegen den Uhrzeigersinn gedreht, so wird der rechte Nocken 80 nach oben gerichtet, wie dies in Fig. 3 dargestellt ist. In diesem Fall wird somit der rechte Schenkel 38 der Schaltwippe 18 beaufschlagt und gegebenenfalls von dem Ventilsitz 24 abgehoben.

Über diese manuelle Betätigungseinrichtung 70 ist somit eine beidseitige Beaufschlagung der Schaltwippe 18 möglich, was insbesondere bei einem Impulsbetrieb des Ventils von Vorteil ist, da dann über diese Betätigungseinrichtung das Ventil insbesondere auch zurückgesetzt werden kann.

Indem die Nockenwelle 76 alternativ in zwei um 180° gedrehten Stellungen auf die Antriebswelle 74 aufsteckbar ist, kann die Zuordnung der Beaufschlagung eines bestimmten Wippenschenkels zu einer bestimmten Drehrichtung beliebig festgelegt werden.

Zudem kann die Wirkungsweise des Ventils durch einen umgekehrten Einbau der Schaltwippe und der Zwischenplatte verändert werden, ohne daß hierbei gleichzeitig auch die manuelle Betätigungseinrichtung auf die gegenüberliegende Seite des Ventils verlagert werden muß. Um die jeweilige Funktion dieser manuellen Betätigungseinrichtung beizubehalten, genügt es, die Nockenwelle um 180° zu drehen. Dies erweist sich insbesondere dann von Vorteil, wenn die Wirkungsweise nachträglich beim Anwender geändert werden muß. Entsprechend dem jeweiligen Einbau und der jeweiligen Drehrichtung wird ein Öffnen oder Schließen des Ventils bewirkt. Insbesondere mit einer weiteren Drehung um 180° in der entgegengesetzten Richtung erfolgt dann ein Rücksetzen der zuvor eingestellten Funktion.

Aus Fig. 3 ergibt sich ferner, daß am oberen Rand des Ventilgehäuses 16 auf zwei einander gegenüberliegenden Seiten jeweils ein Schlitz 94 (nur einer dargestellt) vorgesehen ist, in den die Stege 62 eingesetzt werden, über die die Drehlagerung der Schaltwippe 18 erfolgt.

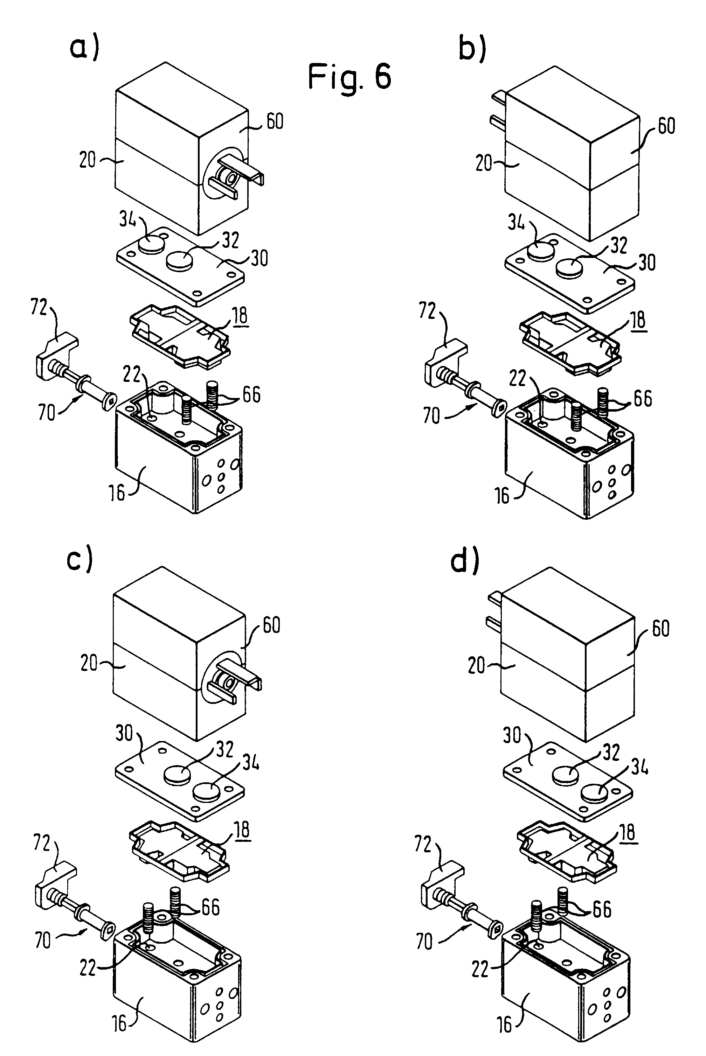

In Fig. 6 sind verschiedene Variationsmöglichkeiten des Zusammenbaus eines in der zuvor beschriebenen Weise modular aufgebauten Ventils dargestellt. Es wird insbesondere die Möglichkeit aufgezeigt, durch bezüglich einer vertikalen Achse um 180° gedrehte Einbaustellungen des elektromagnetischen Ventilantriebs 20 mit aufgesetztem elektrischem Anschlußteil 60 sowie der Zwischenplatte 30 und der Schaltwippe 18 die Wirkungsweise und/oder die elektrische und Medienanschlußseite zu verändern. Diesem Zweck dient auch die symmetrische Anordnung der Medienanschlüsse des Ventilgehäuses 16. So können der Druckanschluß 10 mit zugeordnetem Ventilsitz 22 und der Rücklaufanschluß 14 mit zugeordnetem Ventilsitz 24 je nach Anforderung und gewünschter Wirkungsweise beliebig vertauscht werden.

Gemäß Fig. 6a) ist das Betätigungselement 72 der manuellen Betätigungseinrichtung 70 auf der linken Seite des Ventilgehäuses 16 angeordnet. Die Schaltwippe 18 ist so in das Ventilgehäuse 16 eingesetzt, daß deren rechter Schenkel durch die Rückstellfedern 66 beaufschlagt ist, um diese Schaltwippe 18 in die Ausgangsstellung zu belasten.

In dieser Ausgangsstellung ist der linke Wippenschenkel über den zugeordneten Schließkörper an den Ventilsitz 22 des Druckanschlusses 10 angelegt. Der gegenüberliegende Rücklaufanschluß 14 (vgl. auch Fig. 3) ist geöffnet.

Die Zwischenplatte 30 wird so eingesetzt, daß der elektromagnetische Ventilantrieb 20 über die beiden lokal begrenzten magnetisch leitenden Bereiche 32, 34 nur auf den linken Wippenschenkel wirkt, so daß dieser über den elektromagnetischen Ventilantrieb 20 aus der Ausgangsstellung heraus in eine Arbeitsstellung bewegbar ist, in der der Druckanschluß 10 offen und der Rücklaufanschluß geschlossen ist. Hierzu ist der elektromagnetische Ventilantrieb 20 über den bei dieser Ausführungsform aufgesetzten elektrischen Anschlußteil 60 entsprechend mit Strom zu versorgen. Der elektromagnetische Ventilantrieb 20 mit lösbar aufgesetztem, austauschbarem elektrischem Anschlußteil 60 wird in der dargestellten Weise so angebracht, daß der elektrische Anschluß von der rechten Seite her möglich ist.

Bei stromlosem Ventil ist somit der Druckanschluß 10 geschlossen, während der Rücklaufanschluß 14 geöffnet ist (vgl. auch Fig. 3). Das am ungesteuerten Arbeitsanschluß 12 anstehende Medium kann über den Rücklaufanschluß 14 entweichen.

Wird die Wicklung der Spule des elektromagnetischen Antriebs 20 über den elektrischen Anschluß 60 mit Strom versorgt, so wird im Bereich des linken Wippenschenkels über die magnetisch leitenden Bereiche 32, 34 der Zwischenplatte 30 ein Magnetfeld erzeugt, durch das dieser linke Wippenschenkel angehoben wird, um den Druckanschluß zu öffnen und den Rücklaufanschluß zu schließen. Das Medium wird jetzt in den Arbeitsanschluß 12 gedrückt. Der rechte Wippenschenkel wird magnetisch nicht beaufschlagt, da die Wirkung des rechten Jochschenkels des symmetrisch aufgebauten Elektromagneten durch den magnetisch nichtleitenden Teil der Zwischenplatte 30 aufgehoben wird.

Die in Fig. 6b) gezeigte Variante des Zusammenbaus des Ventils unterscheidet sich dadurch von der der Fig. 6a), daß der elektromagnetische Ventilantrieb 20 einschließlich des aufgesetzten elektrischen Anschlußteils 60 um 180° um die vertikale Achse gedreht ist. Damit wird erreicht, daß die elektrische Anschlußseite nunmehr links liegt. Aufgrund des symmetrischen Aufbaus des im elektromagnetischen Ventilantrieb 20 enthaltenen Elektromagneten wird dadurch die Wirkungsweise des Ventils nicht verändert. Infolge der gleichbleibenden Einbaulage der Zwischenplatte 30 ist nach wie vor sichergestellt, daß nur der linke Wippenschenkel magnetisch beaufschlagt wird. Zusätzliche Maßnahmen zur Anpassung des Ventils an diese Verwendungsart sind somit nicht erforderlich.

Die in Fig. 6c) gezeigte Variante eines möglichen Zusammenbaus des Ventils unterscheidet sich dadurch von der der Fig. 6a), daß nunmehr die Zwischenplatte 30 und die Schaltwippe 18 mit zugeordneten Rückstellfedern 66 bezüglich der vertikalen Achse um 180° gedreht sind. In diesem Fall wird die Schaltwippe 18 durch die Rückstellfedern 66 in eine Ausgangsstellung belastet, in der der Druckanschluß geöffnet und der Rücklaufanschluß geschlossen ist. Das Ventil ist somit bei stromlosem elektromagnetischem Ventilantrieb 20 geöffnet. Durch die ebenfalls um 180° gedrehte Zwischenplatte 30 ist sichergestellt, daß über den elektromagnetischen Ventilantrieb 20 nunmehr der rechte Wippenschenkel beaufschlagt werden kann, während eine magnetische Beaufschlagung des linken Wippenschenkels ausgeschlossen ist, da die Wirkung des linken Jochschenkels bzw. des an dessen freiem Ende vorgesehenen Pols durch den magnetisch nichtleitenden Teil der Zwischenplatte 30 aufgehoben wird.

Sobald die Spule des elektromagnetischen Antriebs 20 über den auf diesen aufgesetzten elektrischen Anschlußteil 60 mit Strom versorgt wird, wird der rechte Wippenschenkel angezogen und von dem dem Rücklaufanschluß 14 zugeordneten Ventilsitz 24 (vgl. auch Fig. 3) abgehoben. Damit werden dieser Rücklaufanschluß 14 geöffnet und der Druckanschluß 10 geschlossen.

Die in Fig. 6d) dargestellte Variante einer möglichen Zusammensetzung des Ventils unterscheidet sich dadurch von der in Fig. 6c) gezeigten, daß der elektromagnetische Antrieb 20 mit aufgesetztem elektrischem Anschlußteil 60 bezüglich der vertikalen Achse um 180° gedreht ist. Damit wird wiederum die elektrische Anschlußseite von rechts nach links verlagert. Aufgrund des symmetrischen Aufbaus des Elektromagneten des Ventilantriebs 20 wird die Wirkungsweise des in Fig. 6c) gezeigten Aufbaus beibehalten. Bei stromlosem elektromagnetischem Ventilantrieb 20 ist das Ventil somit geöffnet. Sobald die Spule des elektromagnetischen Ventilantriebs 20 mit Strom versorgt wird, wird die Schaltwippe 18 entsprechend verschwenkt, um das Ventil zu schließen.

Die jeweils erforderliche, auf die Schaltwippe wirkende Rückstellkraft hängt u.a. von dem dichtzuhaltenden Druck und der Wirkungsweise des Ventils ab. Bei stromlos geschlossenem Ventil und einer Anströmung der betreffenden Sitzdichtung von unten muß die Rückstellkraft so sein, daß sie die Dichtung gegen den angelegten Druck auf den Sitz preßt. Bei stromlos offenem Ventil und einer Anströmung der betreffenden Sitzdichtung von oben unterstützt der über der Dichtung anstehende Druck die Dichtwirkung, so daß die Rückstellkraft nicht dem höheren Wert des stromlos geschlossenen Ventils entsprechen muß.

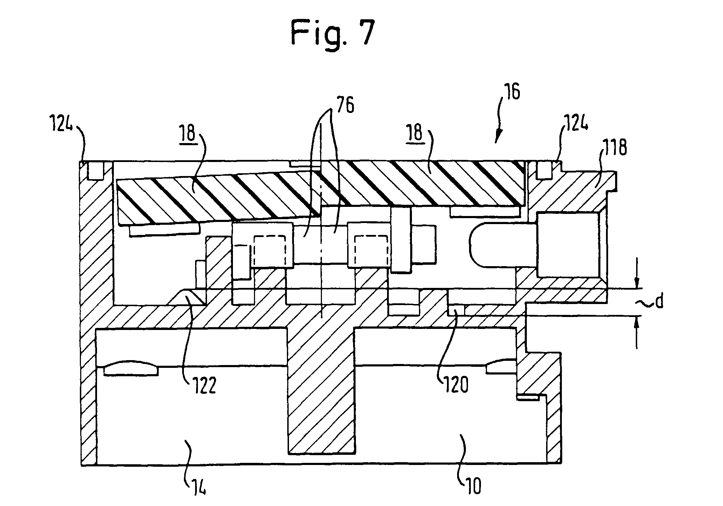

Um dennoch identische Rückstellfedern 66 (vgl. Fig. 1, 2 und 6) verwenden zu können, liegen bei der in Fig. 7 dargestellten Ausführungsvariante die auf der Seite des Druckanschlusses 10 vorgesehenen Federaufnahmen 120 vom der Schaltwippe 18 benachbarten Gehäuserand 124 aus betrachtet tiefer in dem Ventilgehäuse 16 als die auf der gegenüberliegenden Seite des Rücklaufanschlusses 14 vorgesehenen Federaufnahmen 122.

Die die Rückstellfedern 66 (in Fig. 7 nicht gezeigt) abstützenden Federaufnahmen 120, 122 sind in dem Ventilgehäuse 16 in ihrer Tiefenlage so an die unterschiedlichen Bedingungen der verschiedenen Betriebsarten angepaßt, daß der Federweg im Fall des stromlos geöffneten Ventils um den Betrag d länger ausfällt als der Federweg im Fall des stromlos geschlossenen Ventils. Trotz der Verwendung identischer Rückstellfedern 66 erhält man somit unterschiedliche, an die jeweiligen Betriebsarten optimal angepaßte Rückstellkräfte.

Der Vorteil dieser Ausführungsvariante liegt in der Einsparung von zusätzlichen Federn.

## Patentansprüche

1. Modulares Ventil für strömende Medien, mit einem mehrere Medienanschlüsse (10, 12, 14) aufweisenden Ventilgehäuse (16), einer in das Ventilgehäuse (16) eingesetzten, federnd in eine Ausgangsstellung belasteten Schaltwippe (18) und einem gegenüber der Schaltwippe (18) an das Ventilgehäuse (16) angefügten elektromagnetischen Ventilantrieb (20), durch den die Schaltwippe (18) entgegen der Federbelastung (66) in eine Arbeitsstellung bewegbar ist, wobei wenigstens ein Medienanschluß (10, 14) an einem Ventilsitz (22, 24) mündet, an den einer der an der Schaltwippe (18) vorgesehenen Schließkörper (26, 28) anlegbar ist, **dadurch gekennzeichnet,** daß zwischen dem Ventilgehäuse (16) und dem elektromagnetischen Ventilantrieb (20) eine allgemein magnetisch nichtleitende Platte (30) eingesetzt ist, die lokal begrenzte magnetisch leitende Bereiche (32, 34) aufweist, über die der elektromagnetische Ventilantrieb (20) auf einen der beiden Schenkel (36, 38) der Schaltwippe (18) wirkt, während der andere Schenkel (38, 36) magnetisch nicht beaufschlagbar ist, daß die an den entgegengesetzten Enden (40, 42) der Schaltwippe (18) vorgesehenen Schließkörper (26, 28) und die Pole (44, 46, 48) des elektromagnetischen Ventilantriebs (20) jeweils bezüglich einer bei zusammengebautem Ventil die Wippenachse (50) enthaltenden, zur Zwischenplatte (30) senkrechten Ebene symmetrisch angeordnet sind und daß das Ventilgehäuse (16), die Schaltwippe (18) mit zugeordneter Federbelastung (66), die Zwischenplatte (30) und/oder der mit einem elektrischen Anschlußteil (60) koppelbare elektromagnetische Ventilantrieb (20) alternativ jeweils in zwei unterschiedlichen, bezüglich einer gedachten, zur Wippenachse (50) senkrechten und in der Symmetrieebene liegenden Achse (96) um 180° gedrehten Stellungen montierbar sind.

2. Ventil nach Anspruch 1, **dadurch gekennzeichnet,** daß das Ventilgehäuse (16) auf der dem elektromagnetischen Antrieb (20) zugewandten Seite durch die Zwischenplatte (30) abgeschlossen ist.

3. Ventil nach Anspruch 1 oder 2, **dadurch gekennzeichnet,** daß auf beiden Seiten der die Wippenachse (50) enthaltenden, zur Zwischenplatte (30) senkrechten Ebene jeweils wenigstens ein Ventilsitz (22, 24) vorgesehen ist und die Ventilsitze (22, 24) bezüglich dieser Ebene symmetrisch im Ventilgehäuse (16) angeordnet sind.

4. Ventil nach einem der vorhergehenden Ansprüche, **dadurch gekennzeichnet,** daß der elektromagnetische Ventilantrieb (20) ein dreischenkliges Joch (52) sowie eine auf dessen mittlerem Schenkel (54) angeordnete Spule (98) enthält.

5. Ventil nach Anspruch 4, **dadurch gekennzeichnet,** daß der mittlere Jochschenkel (54) bei zusammengebautem Ventil zumindest im wesentlichen in der die Wippenachse (50) enthaltenden, zur Zwischenplatte (30) senkrechten Symmetrieebene liegt.

6. Ventil nach Anspruch 4 oder 5, **dadurch gekennzeichnet,** daß die Zwischenplatte (30) zwei lokal begrenzte magnetisch leitende Bereiche (32, 34) aufweist, von denen einer (32) in der Plattenmitte angeordnet ist und dem freien Ende des mittleren Jochschenkels (54) gegenüberliegt, während der andere (34) dem freien Ende eines der beiden äußeren Jochschenkel (56, 58) gegenüberliegt.

7. Ventil nach einem der Ansprüche 4 bis 6, **dadurch gekennzeichnet,** daß die jeweils einen äußeren Pol (44, 48) bildenden freien Enden der beiden äußeren Jochschenkel (56, 58) den gleichen Abstand zu dem einen mittleren Pol (46) bildenden freien Ende des mittleren Jochschenkels (54) aufweisen.

8. Ventil nach einem der vorhergehenden Ansprüche, **dadurch gekennzeichnet,** daß das Ventilgehäuse (16) einen Druckanschluß (10) und einen Rücklaufanschluß (14) aufweist, die jeweils an einem Ventilsitz (22, 24) münden, an den ein an dem einen bzw. dem anderen Ende (40, 42) der Schaltwippe (18) vorgesehener Schließkörper (26, 28) anlegbar ist, und daß das Ventilgehäuse (16) ferner einen ungesteuerten Arbeitsanschluß (12) aufweist.

9. Ventil nach einem der vorhergehenden Ansprüche, **dadurch gekennzeichnet,** daß bei durch die Federbelastung (66) in ihrer Ausgangsstellung gehaltener Schaltwippe (18) ein an einem Wippenende (40, 42) vorgesehener Schließkörper (26, 28) an einem zugeordneten Ventilsitz (22, 24) anliegt, während bei durch den elektromagnetischen Ventilantrieb (20) in die Arbeitsstellung bewegter Schaltwippe (18) ein am anderen Wippenende (42, 40) vorgesehener Schließkörper (28, 26) an einem anderen Ventilsitz (24, 22) anliegt.

10. Ventil nach einem der vorhergehenden Ansprüche, **dadurch gekennzeichnet,** daß der elektrische Anschlußteil (60) lösbar am elektromagnetischen Ventilantrieb (20) anbringbar ist.

11. Ventil nach einem der vorhergehenden Ansprüche, **dadurch gekennzeichnet,** daß die Schaltwippe (18) über sich entlang ihrer Drehachse (50) verlaufende elastische Stege (62) an einem aus dichtendem Material bestehenden Rahmenteil gelagert ist, der als Gehäusedichtung (64) zwischen das Ventilgehäuse (16) und die dieses abschließende Zwischenplatte (30) einsetzbar ist, und daß auch die an der Schaltwippe (18) vorgesehenen Schließkörper (26, 28) aus dichtendem Material bestehen, wobei die Gehäusedichtung (64) integral mit den Stegen (62) und den Schließkörpern (26, 28) ausgebildet ist.

12. Ventil nach einem der vorhergehenden Ansprüche, **dadurch gekennzeichnet,** daß die Schaltwippe (18) durch Rückstellfedern (66) in ihre Ausgangsstellung belastet ist, die vorzugsweise durch an der Schaltwippe (18) vorgesehene Noppen (68) geführt sind.

13. Ventil nach den Ansprüchen 11 und 12, **dadurch gekennzeichnet,** daß die Noppen (68) integral mit den Schließkörpern (26, 28), den Stegen (62) und der Gehäusedichtung (64) ausgebildet sind.

14. Ventil nach einem der vorhergehenden Ansprüche, **dadurch gekennzeichnet,** daß der Schaltwippe (18) eine manuelle Betätigungseinrichtung (70) zugeordnet ist.

15. Ventil nach Anspruch 14, **dadurch gekennzeichnet,** daß die manuelle Betätigungseinrichtung (70) ein an einer Außenseite des Ventilgehäuses (16) angeordnetes Betätigungselement (72) aufweist, das über eine sich ins Innere des Ventilgehäuses (16) erstreckende, zur Drehachse (50) der Schaltwippe (18) senkrechte Antriebswelle (74) mit einer Nockenwelle (76) verbunden ist, die mit zwei sich radial in entgegengesetzte Richtungen erstreckenden, jeweils einem der beiden Wippenschenkel (36, 38) zugeordneten Nocken (78, 80) versehen ist.

16. Ventil nach Anspruch 15, **dadurch gekennzeichnet,** daß die Nockenwelle (76) als Hohlwelle ausgebildet ist und alternativ in zwei bezüglich einer gedachten, zur Antriebswelle (74) senkrechten Achse um 180° gedrehten Stellungen triebschlüssig axial auf die Antriebswelle (74) aufsteckbar ist.

17. Ventil nach Anspruch 16, **dadurch gekennzeichnet,** daß die Antriebswelle (74) zumindest teilweise die Querschnittsform eines Vielecks besitzt und die Nockenwelle (76) mit einer komplementären Öffnung (82) versehen ist.

18. Ventil nach einem der Ansprüche 15 bis 17, **dadurch gekennzeichnet,** daß das Betätigungselement (72) ein Handknebelknauf ist.

19. Ventil nach einem der Ansprüche 15 bis 17, **dadurch gekennzeichnet,** daß das Betätigungselement (72) eine Schlitzschraube ist.

20. Ventil nach einem der vorhergehenden Ansprüche, **dadurch gekennzeichnet,** daß in dem Ventilgehäuse (16) wenigstens eine druckanschlußseitige und wenigstens eine rücklaufanschlußseitige Federaufnahme (120, 122) vorgesehen ist, daß der Schaltwippe (18) wenigstens eine alternativ auf den beiden Anschlußseiten einsetzbare Rückstellfeder (66) zugeordnet ist, die sich für eine jeweilige Beaufschlagung der Schaltwippe (18) an einer betreffenden Federaufnahme (120, 122) abstützt, und daß die auf unterschiedlichen Anschlußseiten vorgesehenen Federaufnahmen (120, 122) vom der Schaltwippe (18) benachbarten Gehäuserand (124) aus betrachtet unterschiedlich tief in dem Ventilgehäuse (16) liegen.

21. Ventil nach Anspruch 20, **dadurch gekennzeichnet,** daß die druckanschlußseitige Federaufnahme (120) tiefer in dem Ventilgehäuse (16) liegt als die rücklaufseitige Federaufnahme (122).

## Claims

1. A modular valve for fluids comprising a valve housing (16) having a plurality of fluid ports (10, 12, 14), a switching rocker (18) inserted in the valve housing (16) and spring-loaded into an initial position, and an electromagnetic valve drive (20) fitted, opposite to the switching rocker (18), to the valve housing (16), by means of which drive the switching rocker (18) can be moved into a working position against such spring-loading means (66), at least one fluid port (10, 14) opening at a valve seat (22, 24) against which one of the valve members (26, 28) provided on the switching rocker (18) may be applied, characterized in that between the valve housing (16) and the electromagnetic valve drive (20) a generally magnetically non-conductive plate (30) is inserted having locally limited magnetically conductive regions (32, 34) for the electromagnetic valve drive (20) to act through on one of the two limbs (36, 38) of the switching rocker (18), while the other limb (38, 36) is not able to be acted upon magnetically, in that the valve members (26, 28) provided at the opposite ends (40, 42) of the switching rocker (18) and the poles (44, 46, 48) of the electromagnetic valve drive (20) are each arranged symmetrically with respect to a plane containing, in the assembled state of the valve, the axis (50) of the rocker and perpendicular to the intermediate plate (30), and in that the valve housing (16), the switching rocker (18) with the associated spring loading means (66), the intermediate plate (30) and/or the electromagnetic valve drive (20), able to be coupled with an electrical connection part (60), are each able to be mounted alternatively in two different positions angularly spaced by 180° about an imaginary axis (96) which is perpendicular to the rocker axis (50) and in the plane of symmetry.

2. The valve as claimed in claim 1, characterized in that the valve housing (16) is terminated on the side facing the electromagnetic drive (20) by the intermediate plate (30).

3. The valve as claimed in claim 1 or in claim 2, characterized in that on either side of the plane containing the rocker axis (50) and perpendicular to the intermediate plate (30) at least one valve seat (22, 24) is provided and the valve seats (22, 24) are arranged symmetrically in the valve housing (16) as related to this plane.

4. The valve as claimed in any one of the preceding claims, characterized in that the electromagnetic valve drive (20) comprises a three limb yoke (52) and furthermore a coil (98) arranged on a center limb (54) thereof.

5. The valve as claimed in claim 4, characterized in that in the assembled state of the valve, the center yoke limb (54) is at least substantially in the plane of symmetry which is perpendicular to the intermediate plate (30) and containing the rocker axis (50).

6. The valve as claimed in claim 4 or in claim 5, characterized in that the intermediate plate (30) comprises two locally limited magnetically conductive regions (32, 34), of which one (32) is arranged in the center of such plate and is opposite to the free end of the center yoke limb (54), whereas the other (34) is opposite to the free end of one of the two outer yoke limbs (56, 58).

7. The valve as claimed in any one of the claims 4 through 6, characterized in that the free ends, constituting the respectively outer pole (44, 48), of the two outer yoke limbs (56, 58) are at the same distance from the free end, constituting a center pole (46), of the center yoke limb (54).

8. The valve as claimed in any one of the preceding claims, characterized in that the valve housing (16) comprises a delivery port (10) and a return port (14), which respectively open at a valve seat (22, 24), to which a valve member (26, 28) provided at one and, respectively, the other end (40, 42) of the switching rocker (18), can be applied, and in that the valve housing (16) furthermore possesses a non-controlled power port (12).

9. The valve as claimed in any one of the preceding claims, characterized in that with the switching rocker (18) held by the spring loading means (66) in its initial position, a valve member (26, 28) provided on one end (40, 42) of the switching rocker engages an associated valve seat (22, 24), whereas, with the switching rocker (18) moved by the electromagnetic valve drive (20) into its working position, a valve member (28, 26) provided on the other end (42, 40) of the rocker engages another valve seat (24, 22).

10. The valve as claimed in any one of the preceding claims, characterized in that the electrical connection part (60) is adapted to be fitted to the electromagnetic valve drive (20) in a detachable fashion.

11. The valve as claimed in any one of the preceding claims, characterized in that the switching rocker (18) is pivotally mounted by the intermediary of elastic lugs (62), extending along the pivot axis (50) thereof, on a frame part manufactured of sealing material, such frame part being able to be inserted as a housing seal (64) between the valve housing (16) and the intermediate plate (30) terminating same, and in that the valve members (26, 28) provided on the switching rocker (18) are also manufactured of sealing material, said housing seal (64) being formed integrally with the lugs (62) and the valve members (26, 28).

12. The valve as claimed in any one of the preceding claims, characterized in that the switching rocker (18) is urged by return springs (66) into an initial position thereof, which springs preferably run on knobs (68) provided on the switching rocker (18).

13. The valve as claimed in claim 11 and in claim 12, characterized in that the knobs (68) are formed integrally with the valve members (26, 28), the lugs (62) and the housing seal (64).

14. The valve as claimed in any one of the preceding claims, characterized in that the switching rocker (18) has a manual actuating device (70) associated with it.

15. The valve as claimed in claim 14, characterized in that the manual actuating device (70) comprises an actuating element (72) arranged on one outer side of the valve housing (16) and connected, via a drive shaft (74) extending into the interior of the valve housing (16) and perpendicular to the pivot axis (50) of the switching rocker (18), with a cam shaft (76), which is provided with two cams (78, 80) extending radially in opposite directions and each being associated with one of the two limbs (36, 38) of the switching rocker.

16. The valve as claimed in claim 15, characterized in that the cam shaft (76) is a hollow shaft and may be slipped axially over, and drivingly connected with, the drive shaft (74) in either of two alternative settings which are angularly spaced apart by 180° around an imaginary axis which is perpendicular to the drive shaft (74).

17. The valve as claimed in claim 16, characterized in that the drive shaft (74) has at least partially the cross sectional configuration of a polygon and the cam shaft (76) is provided with a complementary opening (82).

18. The valve as claimed in any one of the claims 15 through 17, characterized in that the actuating element (72) is a tommy bar.

19. The valve as claimed in any one of the claims 15 through 17, characterized in that the actuating element (72) is a slotted screw.

20. The valve as claimed in any one of the preceding claims, characterized in that on the delivery port side and, respectively, on the return port side at least one spring receiving means (120, 122) is provided in the valve housing (16), in that the switching rocker (18) has at least one associated return spring (66), able to be employed alternatively on the two connection sides, such return spring bearing, for a respective action on the switching rocker (18), on a respective spring receiving means (120, 122), and in that the spring receiving means (120, 122) provided on the different connection sides have different depths in the valve housing (16) as seen from the housing edge (124) adjacent to the switching rocker (18).

21. The valve as claimed in claim 20, characterized in that the spring receiving means (120) on the delivery port side extends more deeply in the valve housing (16) than the return port side spring receiving means (122).

## Revendications

1. Vanne modulaire pour des milieux en écoulement, comprenant un corps de vanne (16) comprenant plusieurs raccordements de milieux (10, 12, 14), un commutateur à bascule (18) monté dans le corps de vanne (16) et chargé par ressort dans une position de sortie, et comprenant un entraînement de vanne électromagnétique (20) ajouté sur le corps de vanne (16) en face du commutateur à bascule (18), lequel entraînement permet la mobilité du commutateur à bascule (18) à l'encontre de la force des ressorts (66) pour venir en position de travail, au moins un raccord de milieu (10, 14) débouchant sur un siège de vanne (22, 24) sur lequel peut être placé l'un des corps de fermeture (26, 28) prévus sur le commutateur à bascule (18), caractérisé en ce qu'entre le corps de vanne (16) et l'entraînement électromagnétique de vanne (20) est montée une plaque (30) généralement non conductrice magnétiquement comportant des zones magnétiquement conductrices (32, 34) et, localement délimitées par l'intermédiaire desquelles l'entraînement de vanne électromagnétique (20) agit sur l'un des deux bras (36, 38) du commutateur à bascule (18), tandis que l'autre bras (38, 36) ne peut pas être contraint magnétiquement, en ce que les corps de fermeture (26, 28) prévus aux extrémités opposées (40, 42) du commutateur à bascule (18), et les pôles (44, 46, 48) de l'entraînement de vanne électromagnétique (20) sont respectivement disposés de manière symétrique par rapport à un plan contenant l'axe de bascule (50) et perpendiculaire à la plaque intercalaire (30) à l'état monté de la vanne et en ce que le corps de vanne (16), le commutateur à bascule (18) avec les ressorts associés (66), la plaque intercalaire (30) et/ou l'entraînement de vanne électromagnétique (20), pouvant être accouplé à une partie de connexion électrique (60), peuvent être montés chacun alternativement dans deux positions différentes tournées à 180° par rapport à un axe imaginaire (96) se trouvant dans le plan de symétrie et perpendiculaire à l'axe de basculement (50).

2. Vanne selon la revendication 1, caractérisée en ce que le corps de vanne (16) est fermé par la plaque intercalaire (30) du côté tourné vers l'entraînement électromagnétique (20).

3. Vanne selon la revendication 1 ou 2, caractérisée en ce qu'il est prévu sur les deux faces du plan perpendiculaire à la plaque intercalaire (30) et contenant l'axe de bascule (50) respectivement au moins un siège de vanne (22, 24) et en ce que les sièges de vanne (22, 24) sont disposés en symétrie par rapport à ce plan dans le corps de vanne (16).

4. Vanne selon l'une des revendications précédentes, caractérisée en ce que l'entraînement de vanne électromagnétique (20) comprend une culasse (52) à trois branches ainsi qu'une bobine (98) disposée sur la branche médiane (54) de la culasse.

5. Vanne selon la revendication 4, caractérisée en ce que la branche médiane (54) de la culasse se trouve du moins sensiblement dans le plan de symétrie comprenant l'axe de bascule (50) et perpendiculaire à la plaque intercalaire (30) quand la vanne est assemblée.

6. Vanne selon la revendication 4 ou 5, caractérisée en ce que la plaque intercalaire (30) présente deux zones (32, 34) magnétiquement conductrices et localement délimitées, dont l'une (32) est disposée au milieu de la plaque et est en face de l'extrémité libre de la branche médiane (54) de la culasse, tandis que l'autre (34) est en face de l'extrémité libre de l'une des deux branches extérieures (56, 58) de la culasse.

7. Vanne selon l'une des revendications 4 à 6, caractérisée en ce que les extrémités libres des deux branches externes (56, 58) de la culasse, lesquelles extrémités forment chacune un pôle externe (44, 48), présentent la même distance par rapport à l'extrémité libre de la branche médiane (54) de la culasse, formant un pôle médian (46).

8. Vanne selon l'une des revendications précédentes, caractérisée en ce que le corps de vanne (16) présente un raccord de pression (10) et un raccord de refoulement (14) qui débouchent chacun sur un siège de vanne (22, 24) sur lequel peut être appliqué un corps de fermeture (26, 28) prévu à l'une ou l'autre des extrémités (40, 42) du commutateur à bascule (18) et en ce que le corps de vanne (16) présente en outre un raccord de travail (12) non commandé.

9. Vanne selon l'une des revendications précédentes, caractérisée en ce que lorsque le commutateur à bascule (18) est maintenu dans sa position de sortie par les ressorts (66), un corps de fermeture (26, 28) prévu à une extrémité (40, 42) du commutateur à bascule s'applique contre un siège de vanne (22, 24) associé tandis que lorsque le commutateur à bascule (18) est amené par l'entraînement électromagnétique de vanne (20) en position de travail, un corps de fermeture (28, 26) prévu à l'autre extrémité (42, 40) du commutateur s'applique contre un autre siège de vanne (24, 22).

10. Vanne selon l'une des revendications précédentes, caractérisée en ce que la pièce de raccordement électrique (60) peut être montée de manière amovible sur l'entraînement de vanne électromagnétique (20).

11. Vanne selon l'une des revendications précédentes, caractérisée en ce que le commutateur à bascule (18) est logé sur une partie de cadre composée d'un matériau d'étanchéité par l'intermédiaire d'ailettes élastiques (62) s'étendant le long de son axe de rotation (50), laquelle partie de cadre peut être utilisée en tant que joint (64) du corps de vanne entre le corps de vanne (16) et la plaque intercalaire (30) fermant celui-ci et en ce que les corps de fermeture (26, 28) prévus sur le commutateur à bascule (18) se composent d'un matériau d'étanchéité, le joint (64) du corps de vanne ne formant qu'une seule pièce avec les ailettes (62) et les corps de fermeture (26, 28).

12. Vanne selon l'une des revendications précédentes, caractérisée en ce que le commutateur à bascule (18) est ramené dans sa position d'origine par des ressorts de rappel (66) qui sont guidés de préférence par des protubérances (68) prévues sur le commutateur à bascule (18).

13. Vanné selon les revendications 11 et 12, caractérisée en ce que les protubérances (68) sont réalisées d'une seule pièce avec les corps de fermeture (26, 28), les ailettes (62) et le joint d'étanchéité (64) du corps de vanne.

14. Vanne selon l'une des revendications précédentes, caractérisée en ce que le commutateur à bascule (18) est associé à un dispositif d'actionnement manuel (70).

15. Vanne selon la revendication 14, caractérisée en ce que le dispositif d'actionnement manuel (70) présente un élément d'actionnement (72) disposé sur une face externe du corps de vanne (16), lequel élément est relié, par l'intermédiaire d'un arbre d'entraînement (74) perpendiculaire à l'axe de rotation (50) du commutateur à bascule (18) et s'étendant à l'intérieur du corps de vanne (16), à un arbre à cames (76) qui est muni de deux cames (78, 80) associées chacune à l'une de deux branches (36, 38) du commutateur à bascule et s'étendant dans des directions radiales opposées.

16. Vanne selon la revendication 15, caractérisée en ce que l'arbre à cames (76) est conçu comme un arbre creux et peut être monté axialement par entraînement sur l'arbre d'entraînement (74) en alternative dans deux positions tournées à 180° par rapport à un axe imaginaire perpendiculaire à l'arbre d'entraînement (74).

17. Vanne selon la revendication 16, caractérisée en ce que la section transversale de l'arbre d'entraînement (74) présente au moins partiellement la forme d'un polygone et l'arbre à cames (76) est muni d'une ouverture complémentaire (82).

18. Vanne selon l'une des revendications 15 à 17, caractérisée en ce que l'élément d'actionnement (72) est un pommeau de manette.

19. Vanne selon l'une des revendications 15 à 17, caractérisée en ce que l'élément d'actionnement (72) est une vis à fente.

20. Vanne selon l'une des revendications précédentes, caractérisée en ce qu'il est prévu dans le corps de vanne (16) au moins un logement de ressort (120, 122), côté pression et côté refoulement, en ce que le commutateur à bascule (18) est associé au moins à un ressort de rappel (66) pouvant être placé en alternative sur les deux côtés de raccordement, lequel ressort prend appui sur un logement de ressort correspondant (120, 122) pour agir en conséquence sur le commutateur à bascule (18), et en ce que les logements de ressort (120, 122) prévus aux divers côtés de raccordement se trouvent à des profondeurs différentes dans le corps de vanne (16), vu depuis le bord (124) du corps qui est voisin du commutateur à bascule (18).

21. Vanne selon la revendication 20, caractérisée en ce que le logement de ressort (120), côté pression, est situé dans le corps de vanne (16) plus en profondeur que le logement de ressort (122) côté refoulement.
